# EUROPEAN PATENT SPECIFICATION

(11) **EP 0 216 433 B1**
(45) Date of publication and mention of the grant of the patent: **20.01.1993**
(21) Application number: 86201636.7
(22) Date of filing: 22.09.1986
(51) Int. Cl.: C02F 3/28, C02F 3/30, C02F 3/10

(54) **Process for the depuration treatment of effluent waters**
Verfahren für die Abwasserreinigung
Procédé pour l'épuration d'eaux usées

(30) Priority: 25.09.1985 IT 2227285
(43) Date of publication of application: 01.04.1987
(73) Proprietor: Faieta, Marcello, I-20122 Milan (IT)
(72) Inventor: Faieta, Marcello, I-20122 Milan (IT); Allavena, Riccardo, (IT)
(74) Representative: Dragotti, Gianfranco

(56) References cited:
- EP-A- 0 046 901
- DE-A- 1 584 958
- US-A- 3 575 884
- JOURNAL OF THE WATER POLLUTION CONTROL FEDERATION, vol. 53, no. 10, October 1981, pages 1519-1532, Washington, US; K.A. KHAN et al.: "Anaerobic activated carbon filter for the treatment of phenol-bearing wastewater"
- BIOTECHNOLOGY AND BIOENGINEERING, vol. 25, no. 6, June 1983, pages 1581-1596, New York, US; M.T. SUIDAN et al.: "Anaerobic filters for the treatment of coal gasification wastewater"

## Description

The present invention relates to a process and plant for the depuration treatment of effluent waters, both domestic and industrial and more specifically to the treatment for the depuration of the said waters from organic polluting substances, without residual active sludges being formed. It is well known that the most widespread process for the depuration treatment of effluent waters, both civil and industrial, and especially of the effluent waters polluted from substances of organic nature is the so-called biological or active sludge process, essentially consisting in causing a bacterial flora to be formed in the sewage water to be treated; the action of said flora, thanks to the concomitant feeding of oxygen, normally atmospherical oxygen, reduces the contents of polluting substances present in the sewage water, until values are achieved which are acceptable for the discharge in surface waters (rivers, lakes, etc.). This depuration treatment is so known and widespread that no more detailed description is needed.

A problem always accompanying the biological depuration treatment, that is to say unavoidably, is that of the active sludges or secondary sludges which result in a great excess with respect to the amount necessary for the prosecution of the process on further sewage water; since the true depuration treatment is normally followed by a decantation step, the latter gives place to a definitely relevant amount of sludges which in some way must be destroyed.

Owing to the fact that, moreover, these sludges show a high moisture content, ever their thermal elimination requires a drying pre-treatment (for example in a filterpress).

Another way used especially in the past for the elimination of the residual sludges was that of distributing them onto natural drying beds, from which they were later on removed.

Among the biological treatments known and industrially used it is worth to mention also that based on the use of a macroporous mass of carbonaceous nature, described in the US Patent No. 3,575,884 and applied in a process for the water treatment, particularly town sewage, disclosed in the same patent.

In this case the afore said carbonaceous and macroporous mass is used to form a filtering layer, through which the sewage to be depurated is passed, after having undergone the preliminary standard treatments (such as for instance that of primary decantation to remove coarse and suspended materials), the sewage being either simultaneously or previously aerated.

The advantage of the above particular process and of the carbonaceous mass therein used is that of providing excellent depuration results, namely that of lowering the content of polluting organic substances, in combination with a simultaneous filtration of the water, whereby the secondary decantation is no longer necessary, and in combination with a reduced oxygen consumption, the quantitative depuration results being the same.

For more details on this process and on the carbonaceous mass therein used reference is made to the specification of the above cited US Patent. However even with the latter process, as to date exploited, the problem of the excess active sludges remaining at the end of the depuration treatment has to be faced. In this case, as a matter of fact, these sludge results from the counter current washings of the filter, which must be periodically carried out, in order to maintain at satisfactory levels the biological activity.

It is lastly to be noted that all the above mentioned biological treatments are of aerobic type, and thus the microorganisms responsible of the depurating action are aerobic.

Another process exists, of biological nature too, for the depuration treatments of sewage containing dissolved polluting organic substances, this process being called digestion. In this case the sewage is charged into great size tanks (i.e. the digesters) and therein maintained for rather long time periods, of the order of days, in the absence of oxygen. The action of micro-organisms of anaerobic type under rather rigorous environnmental conditions of temperature, pH, concentration of organic substance, degree of stirring, etc., gives place to the destruction of the polluting organic substances and to the development of gas (methane, etc.). In the practical exploitation of this process, however, the reduction of the content of polluting substances is limited to about 50%, for reasons of economical convenience of the process. In that process there is no production of residual sludge, but the fact that the process is stopped before it is completed causes a mass of residual sludges to remain, which moreover are no longer putrescible.

EP-A-0046901 discloses a process and an apparatus for the anaerobic biological treatment of waste water, wherein the microorganisms responsible of the anaerobic action are supported on supporting particle material, having specific gravity of 10 to 200 kg/m³ and macroporosity of a diameter between 0.1 and 5 mm, this supporting material being preferably polyurethane foam or foamed rubber.

No mention appears of the possibility of using a filtering mass like that manufactured acccording to USP No. 3,575,884 nor any even remote indication of the fact that no residual sludges are obtained by this process.

In turn DE-A- 1584958 discloses a process for the aerobic or biological treatment of aqueous suspension of residual sludges of a previous biological aerobic depuration through a filter under anaerobic conditions leading to a reduced sludge residue.

The main purpose of the present invention is that of providing a biological treatment of effluent waters containing polluting organic substances, wherein no active sludges remain at the end of the treatment.

It has now been suprisingly found and is the subject of the present invention that the sewage depuration treatment under anaerobic conditions if carried out in a filter consisting of a layer of the macroporous carbonaceous mass of the USP 3,575,884, permits, besides shortening the duration of the complete treatment of depuration under anaerobic conditions to very short times, on the other side and at same time, to totally eliminate the sludge formation, sludges of organic nature possibly already present in the sewage undergoing the treatment being also destroyed.

Thus the present invention provides a process for the depuration of effluent water from organic polluting substances in which no residual sludge is formed or remains after the treatment characterized in that the effluent water is passed through a filtering mass of macroporous material having a specific surface not greater than 400 m²/g and resulting from a process comprising admixing sawdust of resinous wood with 3 to 6% by weight of concentrated sulfuric acid in 15 to 20 volumes of water with respect to the volume of acid, distilling said mixture at a temperature of 450 to 700°C in the absence of air to obtain charcoal and heating the charcoal after it has been allowed to cool, this heating taking place in the absence of air for at least 20 minutes at a temperature which exceeds by at least 50°C the distillation temperature, the effluent water entering said filtering mass with a low oxygen content such that it is exhausted in the surface layer of the said filtering mass or it is such that anaerobic conditions are established in the whole height of said filtering mass.

According to an alternative embodiment of the process according to the present invention, the sewage to be treated is firstrly fed with oxygen, preferably atmospheric oxygen, in an amount sufficient to establish a phase of biological treatment with active sludges, of aerobical type, and before this phase of aerobical depuration is completed, the sewage is passed to the aforesaid filter under conditions such that in most of the filtering mass a state of anaerobicity is set up.

Otherwise stated, according to this alternative embodiment of the invention, if a sewage is taken and subjected to a normal biological treatment with active sludge, but, before this step of treatment is completed, the sewage is passed with its residual content of oxygen and with its content of active sludge thus formed, through a filtering bed of macroporous material, having low specific surface (not greater than about 400 m²/g as measured according to the BET method), as the carbonaceous mass disclosed in the US Patent 3,575,884, the depuration of the sewage is satisfactorily completed and at the same time no production of residual sludge takes place, whereby the water, which is thus also filtered, can be directly discharged into the collecting pool and the step of periodical counterwashing of the filtering mass is no longer necessary, since there is no longer active sludge to be eliminated.

As already mentioned the essential condition of the process of the present invention is that the content of oxygen,if any of the water fed to the filtering bed and possibly coming from the partial treatment of standard biological depuration is not sufficient to support the setting up or the prosecuting of the aerobical biological action, but on the contrary in most of the filtering mass and more preferably throughout the whole height of the filtering mass an anaerobic condition is established whereby a biological action of anaerobic type occurs.

An equally important condition is that the passage of the water through the filtering bed takes place slowly and that the height or thickness of the same filtering bed is such that a condition of anaerobicity is necessarily established in the pathway of the water through most or preferably all the filtering mass.

In the process according to the present invention, in the preferred embodiment, an anaerobic treatment is provided, by which not only the depuration degree is excellent, and anyhow equal to the desired values, but no residual active sludge is formed and the step of secondary decantation is no longer necessary.

Another feature important as well of the process of the present invention is that the residual sludges of standard biological treatments, preferably suitably diluted, can be fed to the filter of macroporous material and are thus destroyed.

It is readily understood that this further feature and advantage of the present invention, can have and has not negligible industrial importance.

In turn the plant according to the present invention in its essential feature is characterized by the fact that the sewage is fed to a filtering bed consisting of macroporous material having low specific surface and height such that the passage of the sewage through the same bed takes place under non aerobic conditions.

Otherwise stated the plant according to the present invention, in the most general embodiment, is characterized by comprising a filtering bed of macroporous material having low specifc surface and height such that in the sewage to be treated the oxygen content, if any is exhausted in the initial portion of the whole bed, the flow rate of the water through the bed being selected to fulfill the aforesaid condition of exhausting the oxygen content, whereby most of the path of the water through the filtering bed is in anaerobic conditions.

Of course the selection of the flow rate is easily carried out by the skilled man on the basis of the physical parmaters of the filtering bed. In the preferred embodiment of the plant of the present invention the filtering bed consists of the filtering carbonaceous mass disclosed in the U.S. Patent No. 3,575,884 and both the height or thickness of the filtering bed and the flow rate of the water are selected so that the residual oxygen content if any of the water is exhausted in the surface layer of the filtering mass.

According to the alternative embodiment of the process and of the plant of the present invention as above mentioned, two treatment steps of the sewage are provided, the first one being a step of standard biological treatment with aeration of the water to be treated, said step being carried out so that the water coming out therefrom has a low oxygen content, and a second step consisting of the above defined filtering bed operating under the above indicate conditions.

The features and advantages of the present invention shall more clearly appear from the following example describing the results of a practical and industrial embodiment of the process of the present invention.

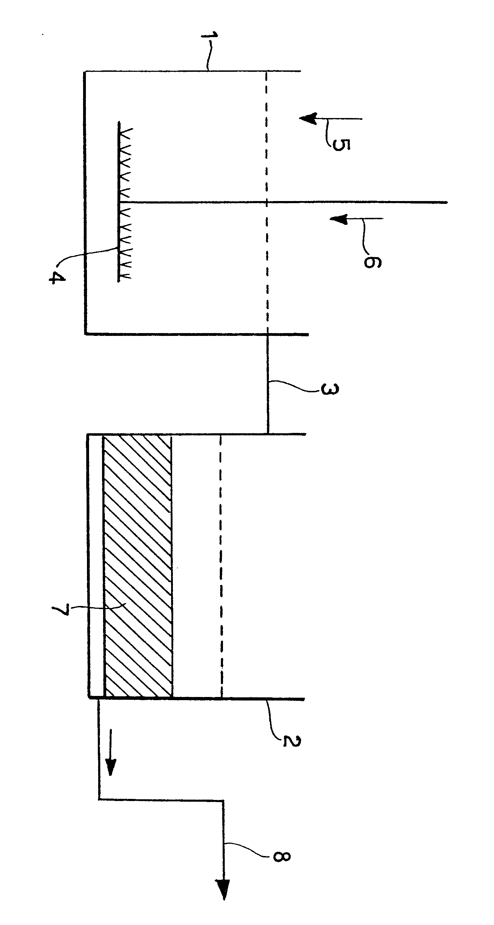

However, before reporting this example, an operating scheme of the plant of the present invention is described, it being in accordance with the aforesaid alternative embodiment and being shown in the enclosed schematic drawing (fig. 1).

In the drawing two treatment tanks are shown, respectively indicated by the reference 1 and 2, and connected by a pipe 3 for the transfer from the tank 1 to the tank 2. In the tank 1 a standard device 4 is provided for the aeration and the stirring of the water contained in the tank, the arrows 5 and 6 indicating the feed of the sewage to be depurated and of the aeration atmospherical air.

In the tank 2, in turn, a filtering bed 7 is provided, preferably consisting of the filtering carbonaceous mass of the already cited US Patent, the water coming from the tank 1 slowly flowing through this bed. The water treated and depurated is taken from the bottom of the tank 2 and passed to the discharge (8).

According to the preferred embodiment the plant does consist only of the tank 2, whereby no particular showing is necessary.

The process of the present invention has been industrially applied in a plant for the treatment of the effluent water of a printing and paper processing shop.

The daily volume of the treated effluent water, limitedly to the working days, is of about 4 cubic meters, distributed in 8 to 9 daily hours. The feeding to the treatment plant takes place at irregular time intervals and irregular as well is the polluting load, both as regards the concentration and as regards the quality.

This load mainly consists of several dyestuff, solvents, even of hydrocarbon type, detergents, cements, suspensions of rubber latex, several additives always in the presence of paper particles.

The process of reduction of the polluting load, expressed as COD and having a starting value of 2000-2500, takes place in sequence in the tanks 1 and 2, with an aeration very strong and extended in the tank 1, wherein the permanence time of the effluent water to be treated is on the average sufficiently long so as to set up and bring to an advanced point the biological depuration of conventional type, whereby the water transferred to the tank 2 has an oxygen content very low and anyhow insufficient to ensure aerobic conditions in the whole height of the filtering mass 7.

In this connection it is worth to mention that among the requisites of the process of the aforesaid US Patent it has always been definitely indicated that of ensuring a sufficient aeration to prevent anaerobic conditions from being set up in the filtering bed.

At the outlet of the tank 2 the water has on the average a COD value less than 100 and, after more than 2 year of continuted operation of the plant in the above indicated conditions, no presence of sludge has been detected.

Further experiments carried out with a plant consisting of only one tank 2, without aeration and thus under essentially anaerobic condition of the filtering bed, confirmed the above indicated results.

## Claims

1. A process for the depuration of effluent water from organic polluting substances in which no residual sludge is formed or remains after the treatment characterized in that the effluent water is passed through a filtering mass of macroporous material having a specific surface not greater than 400 m²/g and resulting from a process comprising admixing sawdust of resinous wood with 3 to 6% by weight of concentrated sulfuric acid in 15 to 20 volumes of water with respect to the volume of acid, distilling said mixture at a temperature of 450 to 700°C in the absence of air to obtain charcoal and heating the charcoal after it has been allowed to cool, this heating taking place in the absence of air for at least 20 minutes at a temperature which exceeds by at least 50°C the distillation temperature, the effluent water entering said filtering mass with a low oxygen content such that it is exhausted in the surface layer of the said filtering mass or it is such that anaerobic conditions are established in the whole height of said filtering mass.

2. A process according to claim 1, characterized in that said effluent water is coming from an aerobic depuration carried out immediately before and on line with respect to said anaerobic step.

3. A process according to claim 1, characterized in that said effluent water entering said filtering mass has an oxygen content which is exhaused in the surface layer of the said filtering mass.

4. A process according to claim 1, characterized in that the oxygen content of said effluent water entering said filtering mass is such that anaerobic conditions are established in the whole height of said filtering mass.

## Patentansprüche

1. Ein Verfahren zur Abklärung von Abwässern mit organisch verseuchten Stoffen, in denen sich nach der Behandlung keine restliche Ablage bildet noch bleibt, dadurch gekennzeichnet, daß die Abwässer durch eine Filtermasse von makroporösem Material geleitet werden, die eine spezifische Oberfläche von nicht mehr als 400 qm/g aufweist und sich aus einem Verfahren ergibt, das eine Mischung von Sägespänen aus Harzholz von 3-6 Prozent konzentrierter Schwefelsäure pro Gewicht in 15-20 Volumen Wasser im Vergleich zum Säurevolumen enthält, indem besagte Mischung bei einer Temperatur von 450-700° C bei Luftabwesenheit destilliert wird zur Gewinnung von Reisigkohle sowie unter Erhitzen der Reisigkohle nach deren Abkühlen, wobei besagtes Erhitzen unter mindestens 20 Minuten Luftabwesenheit bei einer Temperatur stattfindet, die die Destillationstemperatur um mindestens 50°C überschreitet und wobei die Abwässer in besagte Filtermasse mit niedrigem Sauerstoffgehalt eintreten, sodaß selbige in der Oberflächenschicht besagter Filtermasse versiegen oder anaerobe Bedingungen in der Gesamthöhe dieser Filtermasse festgelegt sind.

2. Ein Verfahren gemäß Patentanspruch 1, dadurch gekennzeichnet, daß besagte Abwässer aus einer aeroben Abklärung kommen, die unmittelbar vorher und gleichzeitig mit diesem anaeroben Schritt vorgenommen wird.

3. Ein Verfahren, gemäß Patentanspruch 1, dadurch gekennzeichnet, daß diese Abwässer, die in besagte Filtermasse eintreten, einen Sauerstoffgehalt aufweisen, der in der Oberflächenschicht besagter Filtermasse versiegt.

4. Ein Verfahren, gemäß Patentanspruch 1, dadurch gekennzeichnet, daß der Sauerstoffgehalt besagter Abwässer, die in diese Filtermasse eintreten, derart ist, daß anaerobe Bedingungen in der Gesamthöhe besagter Filtermasse festgelegt sind.

## Revendications

1. Un procédé pour débarasser les eaux-vannes de substances organiques polluantes, dans lequel aucune boue résiduelle ne se forme ou subsiste après le traitement, caractérisé en ce que les eaux-vannes sont passées à travers une masse filtrante en matériau macro-poreux présentant une surface spécifique inférieure ou égale à 400 m²/g et obtenue par un procédé consistant à mélanger de la sciure de bois résineux avec 3 à 6 %, en poids, d'acide sulfurique concentré dans 15 à 20 volumes d'eau par rapport au volume d'acide, puis à distiller ledit mélange à une température comprise entre 450 et 700°C en l'absence d'air pour obtenir du charbon de bois puis, après refroidissement, à chauffer le charbon de bois, ce chauffage étant effectué en l'absence d'air, pendant au moins 20 minutes, à une température dépassant, au moins, de 50°C la température de distillation, les eaux-vannes entrant dans ladite masse filtrante avec une teneur en oxygène suffisamment faible pour que celui-ci soit absorbé par la couche superficielle de ladite masse filtrante ou que s'établissent des conditions anaérobies dans toute la hauteur de ladite masse filtrante.

2. Un procédé selon la revendication 1, caractérisé en ce que les dites eaux-vannes proviennent d'une étape d'épuration aérobie effectuée immédiatement avant et en ligne avec ladite étape anaérobie.

3. Un procédé selon la revendication 1, caractérisé en ce que les dites eaux-vannes qui entrent dans ladite masse filtrante ont une teneur en oxygène qui est absorbée par la couche superficielle de ladite masse filtrante.

4. Un procédé selon la revendication 1, caractérisé en ce que la teneur en oxygène des dites eaux-vannes qui entrent dans ladite masse filtrante est telle que des conditions anaérobies s'établissent dans toute la hauteur de ladite masse filtrante.
